Europäisches Patentamt

European Patent Office

Office européen des brevets

(11) Veröffentlichungsnummer: **0 473 835 A1**

## EUROPÄISCHE PATENTANMELDUNG

(21) Anmeldenummer: **90117296.5**

(51) Int. Cl.5: **G08B 13/16**

(22) Anmeldetag: **07.09.90**

(43) Veröffentlichungstag der Anmeldung:
**11.03.92 Patentblatt 92/11**

(84) Benannte Vertragsstaaten:
**AT BE CH DE DK ES FR GB GR IT LI LU NL SE**

(71) Anmelder: **SIEMENS AKTIENGESELLSCHAFT**
**Wittelsbacherplatz 2**
**W-8000 München 2(DE)**

(72) Erfinder: **Müller, Norbert, Dipl.-Ing. (FH)**
**Riesengebirgstrasse 5**
**W-8400 Regensburg(DE)**

Erfinder: **Wolfram, Berthold, Dipl.-Ing. (FH)**
**Mattingerstrasse 3**
**W-8400 Regensburg(DE)**

(54) Verfahren zum Betrieb einer Anordnung zur Ultraschall-Raumüberwachung.

(57) Verfahren zum Betrieb einer Anordnung zur Ultraschall-Raumüberwachung in einer ersten Betriebsart, nämlich mit Impulsecho-Betrieb (I), bei welchem (I) das Profil der Amplituden der empfangenen Echos (E) überwacht wird ( = Echoamplituden-Auswertebetrieb I), und in einer zweiten Betriebsart (D), nämlich mit Dopplereffekt-Auswertebetrieb (I und / oder D), bei welchem (I und / oder D) das Spektrum des empfangenen Ultraschalles (E) überwacht wird. Ein Speicher (M) dient zur Speicherung von die empfangenen Signale (E) mehr oder weniger präzis beschreibenden Daten und speichert dazu Daten über einen oder mehrere Abschnitte eines der zuletzt empfangenen Signale (E). Eine Auswerteschaltung (G) vergleicht im Betrieb mittels des Speichers (M) die Profile der Amplituden und die Spektren der nacheinander empfangenen Signale (E), erkennt periodische und / oder durch Luftschlieren hervorgerufene aperiodische Änderungen der empfangenen Signale (E) zumindest weitgehend als alarmirrelevant. Die Auswerteschaltung (G) weist im Betrieb zunächst nur die eine der beiden Betriebsarten, also die erste (I) oder die zweite (D), auf, bevor sie (G) im Betrieb anschließend vorübergehend die andere der beiden Betriebsarten, also die zweite (D) oder die erste (I), - aber nur dann - aufweist, wenn zuvor die eine Betriebsart ein alarmrelevantes Kriterium aufwies. Die Auswerteschaltung (G) löst erst nach dem Erkennen (in V) von alarmrelevanten Kriterien in den beiden Betriebsarten (I und D) den Alarm (N) aus.

FIG 4

EP 0 473 835 A1

Die Erfindung geht von dem im Oberbegriff des Patentanspruches 1 definierten Verfahren aus, das für sich vielfach vorbekannt ist, vgl.
- DE-C2-29 38 969.

Die Erfindung betrifft also die Erschwerung von Einbrüchen und Diebstählen, sowie das Erschweren des unbemerkten Betretens geschützter Räume.

Die Erfindung wurde zwar zunächst für die Innenraumüberwachung eines KFZ entwickelt. Es zeigte sich aber, daß sie darüber hinaus auch auf andere, unter den genannten Oberbegriff fallende Anordnungen anwendbar ist. Die Erfindung ist nämlich z.B. auch zur Innenraumüberwachung anderer Fahrzeuge, z.B. auch für LKWs geeignet, aber im Prinzip auch zur Außenraumüberwachung, z.B. vor Gebäuden.

Ein Hauptproblem solcher Verfahren ist die Vermeidung von Fehlalarmen.

Das oben genannte bekannte Verfahren nutzt dazu bereits den Speicher der Auswerteschaltung, um harmlose aperiodische Bewegungen von Luftschlieren zu erkennen, die z.B. durch Wärmeeinstrahlung, also z.B. durch Sonnenlicht, hervorgerufen werden. Das oben genannte bekannte Verfahren nutzt außerdem den Speicher der Auswerteschaltung, um harmlose periodische Bewegungen, z.B. die von Ventilatoren und Uhrenpendeln, möglichst zuverlässig als alarmirrelevant zu erkennen. Dazu wird dort bereits der Impulsecho-Betrieb in kombinierter Weise angewendet, nämlich in der Auswerteschaltung sowohl das Profil der Amplituden der empfangenen Signale, als auch deren Spektren unter Beachtung des Dopplereffektes ausgewertet. Wird ein Raum gleichzeitig durch diese beiden Auswertemethoden überwacht, dann ist die Sicherheit, einen Einbruch zu erkennen, bereits besonders groß.

Die Erfindung nutzt auch die Vorteile des im Oberbegriff des Patentanspruches 1 genannten Verfahrens. Die Erfindung betrifft aber eine Weiterbildung dieses bekannten Verfahrens, um die Anzahl der Fehlalarme weiter zu verringern, indem gewisse Zusatzbedingungen beachtet werden.

Die Erfindung geht nämlich von der Erkenntnis aus, daß dann, wenn ein Raum durch die zweite Betriebsart, also durch den Dopplereffekt-Auswertebetrieb, überwacht wird, oft das ultraschallfrequente Dröhnen, Klirren und / oder Kreischen von Gegenständen Fehlalarme auslöst, falls dieses ultraschallfrequente Geräusch - z.B. durch Arbeiten mit Werkzeugen - außerhalb jener Reichweite erzeugt wird, in welcher noch die Profile der Amplituden der empfangenen Signale ausgewertet werden.

Außerdem geht die Erfindung von der Erkenntnis aus, daß die ständige kombinierte Anwendung beider Betriebsarten, also erstens des Echoamplituden-Auswertebetriebes und zweitens des Dopplereffekt-Auswertebetriebes, die Stromversorgungs-Batterie zu stark belasten kann und daß die ständige kombinierte Anwendung dieser beiden Auswertebetriebe auch die Elektronik zu stark erwärmen kann, wodurch die Gefahr von Fehlalarmen ansteigt.

Die Aufgabe,
- trotz besonders wenig Aufwand noch zuverlässiger als bisher Fehlalarme zu vermeiden, ohne die Alarmsituation weniger zuverlässig als mit dem bekannten Verfahren zu erkennen,
- besonders jene Geräusche als alarmirrelevant zu erkennen, welche außerhalb jenes Bereiches erzeugt werden, welcher durch die Auswertung der Profile der Amplituden der Impulsechos überwacht wird, also die Anordnung unempfindlich zu machen z.B. gegen das ultraschallfrequente Dröhnen, Klirren und / oder Kreischen von Gegenständen, welche mit Werkzeugen außerhalb des durch die Profile der Amplituden überwachten Raumes erzeugt werden, und
- den Aufwand an elektrischer Energie bei Bedarf möglichst niedrig machen zu können, z.B. zur Schonung einer Stromversorgungs-Batterie und / oder zur Vermeidung von zu starken, die Fehlalarmneigung fördernden Erwärmungen der Elektronik, wird erfindungsgemäß durch das im Patentanspruch 1 definierte Verfahren gelöst.

Die in den Unteransprüchen definierten Gegenstände gestatten, zusätzliche Vorteile zu erreichen. U.a. gestatten nämlich die zusätzlichen Maßnahmen gemäß Patentanspruch

2, besonders wenig Aufwand an Auswertungsvorgängen in der Anordnung und besonders wenig Aufwand an elektrischer Energie zu ermöglichen,

3, ganz besonders wenig Aufwand an elektrischer Energie zu ermöglichen,

4, der Auswerteschaltung zuverlässig ausreichend Zeit zur Verfügung zu stellen, um mit besonders hoher Genauigkeit den Dopplereffekt auswerten zu können, und dadurch mit erhöhter Wahrscheinlichkeit eine alarmrelevante Lage von einer alarmirrelevanten Lage unterscheiden zu können, obwohl durch den im Regelfall - nämlich solange keine alarmrelevanten Kriterien auftreten - allein angewendeten Echoamplituden-Auswertebetrieb besonders viel elektrische Energie gespart wird,

5, bei einem Einbruch die dann oft sofort stark auftretenden Dopplereffekt-Frequenzänderungen besonders rasch zur Auslösung des Alarmes ausnutzen zu können, also dann mit noch erhöhter Schnelligkeit eine alarmrelevante Lage von einer alarmirrelevanten Lage unterscheiden zu können, sowie

6, mit besonders hoher Wahrscheinlichkeit eine alarmrelevante Lage von einer alarmirrelevanten Lage auch dann unterscheiden zu können, wenn die Dopplereffekt-Frequenzänderungen relativ schwach sind,

8, nicht nur elegant mit wenig Hardwareaufwand die Auswerteschaltung realisieren zu können, sondern auch den Prozessor im Regelfall - nämlich solange keine alarmrelevanten Kriterien auftreten - auch für andere Steuer- oder Rechneraufgaben mitausnutzen zu können, also z.B. für die Steuerung einer Zentralverriegelungsanlage und / oder einer Klimaanlage mitausnutzen zu können, sowie

9, die Anordnung mit besonders wenig Hardwareaufwand realisieren zu können.

Der Anspruch 7 betrifft hierbei den Schutz der Anordnung statt unmittelbar nur den Schutz des Verfahrens.

Die Erfindung und Weiterbildungen derselben werden anhand der in den Figuren gezeigten Ausführungsbeispiele der Erfindung weiter erläutert, welche der Übersichtlichkeit wegen jeweils möglichst einfach dargestellt wurden. Dabei zeigen die Figuren

1 bis 3    Beispiele für die von der Auswerteschaltung ermittelten Differenzen zwischen den Profilen der Amplituden der aktuell empfangenen Signale und den zuvor empfangenen gespeicherten Signale, welche Profilen von Amplituden entsprechen, und

4          ein Beispiel für das Schaltschema einer erfindungsgemäß betreibbaren Anordnung.

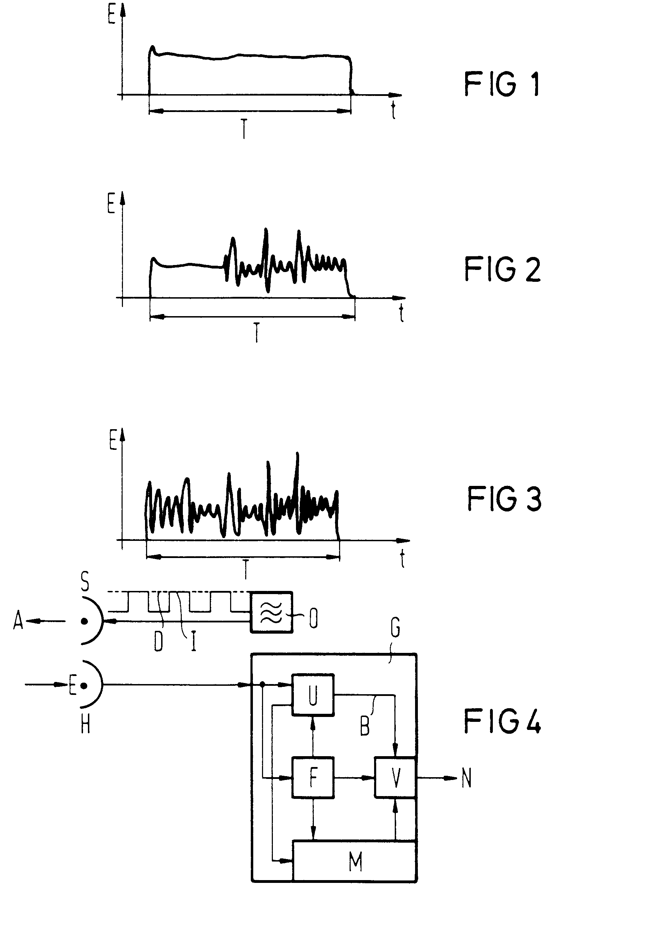

Die Figur 4 zeigt also beispielhaft eine Anordnung zur erfindungsgemäßen Ultraschall-Raumüberwachung. Sie enthält einen taktbaren Oszillator bzw. Generator bzw. Sender O, welcher die von der Sendeantenne S abgestrahlten Impulse I erzeugt.

Im gezeigten Beispiel sind die abgestrahlten Signale E z.B. jeweils Ultraschall-Impulse I, - besonders wenn die Anordnung zuerst in der ersten Betriebsart, also im Echoamplituden-Auswertebetrieb, betrieben wird, und danach nur dann noch in der zweiten Betriebsart, also im Dopplereffekt-Auswertebetrieb, betrieben wird, falls zuvor im Rahmen des Echoamplituden-Auswertebetriebes ein alarmrelevantes Kriterium erkannt wurde. (Auf die andere Variante des erfindungsgemäßen Verfahrens, bei welchem in umgekehrter Weise zuerst die zweite Betriebsart, also der Dopplereffekt-Auswertebetrieb, und erst danach die erste Betriebsart, also der Echoamplituden-Auswertebetrieb, durchgeführt wird, wird erst später eingegangen)

Die abgestrahlten Ultraschall-Impulse I dauern jeweils z.B. 1 Millisekunde, woran sich jeweils eine längere Pause von z.B. 15 oder z.B. 200 Millisekunden anschließt; - bei Anwendung des 200-Millisekunden-Taktes kann also ein Bereich bis zu maximal rund 30 Meter Entfernung in eindeutiger Weise überwacht werden, falls Mehrfachreflexionen unbeachtet bleiben können. Besonders dann, wenn die Anlage zur Innenraumüberwachung dient, z.B. zur Innenraumüberwachung eines KFZ, dann ist übrigens häufig zu empfehlen, ähnlich große Dauern für die einzelnen Impulse I und für die Pausen zwischen ihnen zu wählen, selbst der Innenraum höchstens wenige Meter lang ist, weil dort oft sehr starke Mehrfachreflexionen und Nachhalleffekte auftreten und gewollt bei der Analyse der Echos mitausgewertet werden.

Ein reflektierter Teil E der abgestrahlten Signale I bzw. A wird von der Empfangsantenne H empfangen, wobei nur der Übersichtlichkeit wegen die Empfangsantenne E als eigenes Bauelement gezeigt ist. Der Fachmann ist bewußt, daß er, wie oft bei Ultraschall-Radar üblich, die Sendeantenne S gleichzeitig als Empfangsantenne H benutzen kann, indem rhythmisch zwischen Sendebetrieb und Empfangsbetrieb gewechselt wird.

Die Anordnung enthält ferner die Auswerteschaltung G, welche z.B. für sich ein Gerät G bildet, aber z.B. auch zusammen mit dem Oszillator O bzw. Sender O ein einziges Gerät G/O bilden kann.

Die Anordnung enthält ferner einen Analog-Digital-Umsetzer U, welcher die über die Empfangsantenne H empfangenen analogen Signale E in digitale Signale umsetzt. Diese Digits entsprechen zumindest einzelnen Werten der Amplituden der Hüllkurve über den empfangenen Echos.

Diese Digits, oder zumindest ein ausgewählter Teil von ihnen, bilden - im allgemeinen binäre - Daten, welche im Speicher M gespeichert werden. Dieser Speicher M kann z.B. einen RAM darstellen. Außerdem werden diese Digits bzw. Daten - oder ebenfalls nur ein ausgewählter Teil B von ihnen - einem Vergleicher V zugeleitet.

Der Speicher M dient also zur digitalen Speicherung von die empfangenen Signale E mehr oder weniger präzis beschreibenden Daten. Die gespeicherten Daten stellen daher, genau genommen, einzelne beschreibende Werte über ein oder mehrere Echos E der von den Ultraschall-Impulsen I erzeugten Folgen dar, zumindest aber einzelne Werte über einen oder mehrere Abschnitte eines der zuletzt empfangenen Echos / Signale E.

Die Anordnung enthält ferner einen Frequenzanalysator F, welcher das Spektrum der empfangenen Signale E mehr oder weniger präzise ermitteln kann. Die Ausgangssignale dieses Frequenzanalysators F können, falls sie nicht ohnehin bereits in digitaler Form vorliegen, ebenfalls dem Analog-Digital-Umwandler U, oder einem anderen solchen Umwandler, zur Erzeugung entsprechender Digits zugeleitet werden. Auch diese Digits, welche mehr oder weniger präzise das Spektrum beschreiben, werden ebenfalls dem Speicher M sowie dem Vergleicher V - oder einem ähnlichen Speicher und / oder einem ähnlichen Vergleicher - zugeleitet.

Diese Frequenzanalyse, also der Dopplereffekt-Auswertebetrieb der Anordnung, ist relativ aufwendig im Vergleich zum Echoamplituden-Auswertebetrieb I : relativ groß ist nämlich die Dauer, der Energieverbrauch und die Anzahl der Einzelschritte im Frequenzanalysator F. Der Echoamplituden-Auswertebetrieb der Anordnung, der alleine zur Analyse der Profile der Amplitude der Hüllkurve des empfangenen Echos dient, erfordert jedenfalls viel weniger Zeit, weniger Energie und deutlich weniger Einzelschritte der Anordnung.

Der Vergleicher V vergleicht das soeben empfangene Signal E genauer : Er vergleicht jene daraus erzeugten Daten B mit entsprechenden, im Speicher M gespeicherten Daten für einen oder für mehrere der früher empfangenen Signale E, um aus der Größe der daraus ermittelbaren Differenzen - z.B. aus der Schnelligkeit der Änderung der ermittelten Differenzen - zu erkennen, ob ein alarmrelevantes Kriterium vorliegt oder nicht. Um die Figur nicht zu kompliziert zu machen, wurde dort unterstellt, daß dieser Vergleicher V auch die Ergebnisse seines Vergleiches selbst zusätzlich noch bewertet. Die Auswerteschaltung G kann aber zur Bewertung der Vergleichsergebnisse auch eigene zusätzliche, nicht gezeigte Einheiten aufweisen.

Mit Hilfe des Speichers M und des - hier auch bewertenden - Vergleichers V kann die Anordnung, wie in der oben genannten bekannten Anordnung, bei Bedarf zusätzlich auch solche Differenzen als alarmirrelevant einstufen, welche periodischen Bewegungen entsprechen, welche also z.B. einem eingeschalteten Ventilator entsprechen.

Hierbei vergleicht der Vergleicher V zumindest jene Daten, welche den Profilen der Amplitude der Hüllkurve der empfangenen Signale E entsprechen, - evtl. zusätzlich noch jene Daten, welche den jeweiligen Spektren dieser empfangenen Signale E entsprechen. Aus der Art und aus der Stärke der Abweichung der aktuell empfangenen Signale E, bezogen auf vorher empfangene gespeicherte Signale E, erkennt die Anordnung, ob harmlose Luftschlieren oder alarmrelevante Kriterien vorliegen. Die erfindungsgemäße Anordnung analysiert dazu mittels des Speichers M und des Vergleichers V nicht nur Änderungen der Echoamplituden, wobei das Profil der Amplituden der empfangenen Echos E überwacht wird. Die erfindungsgemäße Anordnung analysiert zeitweise auch Änderungen des Frequenzspektrums, indem dann auch Dopplereffekt ausgewertet wird.

Sobald die Anordnung G alarmrelevante Vergleichsergebnisse ermittelt, kann sie einen Alarm N auslösen. Anders als bei der oben genannten bekannten Anordnung vergleicht die gezeigte, erfindungsgemäß betriebene Auswerteschaltung G aber im Betrieb zunächst nur die Profile der Amplituden der empfangenen Signale E im Rahmen eines Echoamplituden-Auswertebetriebes, vgl. I, also im Rahmen einer ersten Betriebsart. Die gezeigte, erfindungsgemäß betriebene Auswerteschaltung G vergleicht in einem späteren Dopplereffekt-Auswertebetrieb anschließend vorübergehend in einer zweiten Betriebsart (ausschließlich für sich alleine, oder gleichzeitig überlagert zur ersten Betriebsart) die Spektren der empfangenen Signale E nur dann mittels des Vergleichers V, wenn zuvor der Vergleich der Profile der Amplituden der empfangenen Signale E ein alarmrelevantes Kriterium ergab. Die erfindungsgemäß betriebene Auswerteschaltung G löst aber erst dann den Alarm N aus, falls sowohl die Überwachung der Profile der Amplituden als auch die Überwachung der Spektren jeweils für sich ausreichend alarmrelevante Veränderungen ergaben. Nach dem vorübergehenden Dopplereffekt-Auswertebetrieb geht die Anordnung wieder in den Echoamplituden-Auswertebetrieb über, also in die zuvor durchgeführte erste Betriebsart.

Dieser erfindungsgemäße Auswertebetrieb ist noch deutlicher anhand der Figuren 1 bis 3 erläuterbar, welche Beispiele nicht für die empfangenen Signale E, sondern für durch Vergleiche ermittelte Differenzen (!!) zwischen einerseits den aktuellen und andererseits den vorher empfangenen gespeicherten Profilen der Amplituden der empfangenen Signale E zeigen. Die in den Figuren 1 bis 3 gezeigten Beispiele sind also Beispiele für rechnerische Ergebnisse, welche die Auswerteschaltung G mittels des Speichers M und mittels der aktuell empfangenen Echos E ermittelte. Die Dauer T beträgt z.B. das 15-Fache der Dauer eines einzelnen, von der Sendeantenne S ausgesendeten Ultraschall-Impulses I. Wenn die Anordnung zur Innenraumüberwachung eines KFZ dient und die Dauer des einzelnen ausgesendeten Impulses I z.B. 1 Millisekunde beträgt, dann beträgt die Dauer T des aktuellen Echoprofils, das mit dem entsprechenden gespeicherten Echoprofil gleicher Dauer T verglichen wird, z.B. T = 15 Millisekunden, falls man auch Mehrfachreflexionen bzw. länger dauernde Nachhalleffekte mitauswerten will.

Die Figur 1 zeigt ein Beispiel für den Fall, daß während der ausgewerteten, also miteinander verglichenen, Echodauern T nur gewisse Luftschlieren, also Temperatureinflüsse, zu erkennen sind. Diese Figur 1 zeigt also nicht das Profil eines Echos E, sondern errechnete Veränderungen von Echo zu Echo, wobei jedoch - nur der Übersichtlichkeit wegen - der Beginn und das Ende der ausgewerteten Dauer T in gleicher Weise wie eine Anstiegsflanke und eine Abfallflanke eines Signalimpulses eingezeichnet wurde. Die Veränderungen von Echo E zu Echo E sind in Figur 1 jeweils nur sehr klein während der gesamten Dauer T des Echos E. Diese Veränderungen sind viel zu klein, als daß die Auswerteschaltung G, bzw. ihr - im gezeigten Beispiel diese Veränderungen auch bewertender - Vergleicher V, daraus ein alarmrelevantes Kriterium ableitet.

Die Figur 3 zeigt ein Beispiel für den Fall, daß während der miteinander verglichenen Echodauern T - also beim Vergleich von dem wieder z.B. T = 15 Millisekunden dauernden, soeben empfangenen Echo E mit dem zuvor gespeicherten, 15-Millisekunden-Echo E - deutlich während der ganzen Dauer T Geräusche zu erkennen sind, weswegen erfindungsgemäß dann die Anordnung von Echoamplituden-Auswertebetrieb in den Dopplereffekt-Auswertebetrieb übergeht, um zu erkennen, ob ein Alarm N ausgelöst werden soll.

Die Figur 2 zeigt ein Beispiel für den Fall, daß während der miteinander verglichenen Echodauern T nur anfänglich - im gezeigten Beispiel nur während der ersten ca. 5 Millisekunden - gewisse Luftschlieren, also Temperatureinflüsse, zu erkennen sind, daß aber im Rest der verglichenen Echodauern T ein überlagertes, spontan einsetzendes Ultraschall-Geräusch erkennbar ist.

Es mag Anwendungsfälle geben, in welchen aus einem solchen Echo E gemäß Figur 2 bereits ein alarmrelevantes Kriterium abgeleitet wird - wonach dann erfindungsgemäß erst noch die Spektren der Geräusche verglichen wird, bevor AUCH aus dem Vergleich von aufeinander folgenden Echos E erhebliche Veränderungen der Spektren und daraus ein Alarmkriterium abgeleitet wird. - Die Erfindung gestattet, auch schon bei Echoprofilen E nach Art der Figur 2 zum Dopplereffekt-Auswertebetrieb überzugehen, um so das Vorhandensein eines weiteren alarmrelevanten Kriteriums zu suchen und gegebenenfalls einen Alarm N auszulösen.

Bei einem Einbruch bzw. Diebstahl bzw. verbotenen Betreten des überwachten Raumes tritt im Regelfall das Ultraschall-Geräusch während der gesamten ausgewerteten Echodauer T auf, nicht nur in einem kurzen Abschnitt innerhalb dieser Impulsechodauer T. Bei Profildifferenzen E nach Art der Figur 2 handelt es sich meistens nur um einen besonders kurzen Knall mit Ultraschallanteilen, welcher häufig noch nicht den Alarm N auslösen soll. Häufig, wenn nicht sogar im allgemeinen, wird man deswegen aus Profildifferenzen E, wie sie die Figur 2 zeigt, noch kein alarmrelevantes Kriterium ableiten, das für sich bereits den erfindungsgemäßen Übergang zur zusätzlichen Überwachung der Veränderungen der Spektren der erkannten Geräusche auslöst.

Die erfindungsgemäße Auswerteschaltung G kann so dimensioniert werden, daß sie bei Echoprofildifferenzen E nach Art der Figur 2 noch nicht zum Dopplereffekt-Auswertebetrieb übergeht. Wenn die Auswerteschaltung G bzw. ihr Vergleicher V erkennt, daß während nennenswerter Abschnitte der Gesamtdauer T - z.B. während mehr als 2 Millisekunden der T = 15 Millisekunden - des Einzelechos E höchstens Luftschlieren, aber keine starken Geräusche vorhanden sind, dann zögert diese Auswerteschaltung G den Übergang zum Dopplereffekt-Auswertebetrieb hinaus, bis Echos E z.B. gemäß Figur 3 auftreten, welche während der ganzen ausgewerteten Echodauer T - oder zumindest während weitgehend der ganzen Dauer T - alarmrelevante Geräusche aufweisen. Erst nach Echos E ähnlich Figur 3 wird vorübergehend zum Dopplereffekt-Auswertebetriebübergegangen, um noch zu prüfen, ob sich die Spektren dieser Geräusche ebenfalls in alarmrelevanter Weise verändern, bevor schließlich ein Alarm N ausgelöst wird.

Weil dieses Beispiel der Erfindung zunächst nur den stromsparenden Echoamplituden-Auswertebetrieb vorsieht, bevor evtl. noch zum Dopplereffekt-Auswertebetrieb übergegangen wird, ist der Aufwand an elektrischer Energie besonders niedrig. Dadurch wird nicht nur die Stromversorgungs-Batterie geschont, falls eine solche vorhanden ist. Auch starke Erwärmungen der Elektronik werden in alarmlosen Zeiten vermieden, welche ihrerseits unangenehmerweise häufig die Fehlalarmneigung der Anordnung stark fördern würden.

Weil dieses Beispiel der Erfindung dann zunächst nur die Echoamplituden E bewertet, vermeidet es überdies Fehlalarme, welche durch bestimmte Geräusche hervorgerufen werden : nämlich Ultraschallgeräusche, welche zwar an sich potentiell als alarmrelevant eingestuft werden könnten, welche aber außerhalb jenes Raumes erzeugt werden, der durch die Auswertung der Profile E der Amplituden überwacht wird. Erst wenn die Bewertung der Echoamplituden ein alarmrelevantes Kriterium ergeben, werden die Veränderungen der Geräuschspektren auf alarmrelevante Kriterien untersucht, bevor ein Alarm N ausgelöst wird. Das gezeigte Beispiel der Erfindung ist also unempfindlich z.B. gegen das ultraschallfrequente Dröhnen, Klirren und / oder Kreischen von Gegenständen, welche mit Werkzeugen außerhalb des durch die Profile E der Amplituden überwachten Raumes erzeugt werden.

Besonders wenig Aufwand an elektrischer Energie ist dann nötig, wenn die Anordnung im Betrieb ständig nur den Ultraschall-Impulsecho-Betrieb I aufweist.

Bei der Erfindung kann aber der Dopplereffekt-Auswertebetrieb zumindest vorübergehend auch einen - dann aufwendigeren - Dauerton-Auswertebetrieb, darstellen, vgl. D, bei welchem die Dauer des ausgesendeten Ultraschall-Dauertones mindestens 10-fach, z.B. 150-fach, länger ist als die jeweilige Dauer der zuvor im Impulsecho-Betrieb I ausgesendeten Ultraschall-Impulse I/A, bevor die Anordnung anschließend wieder in den Impulsecho-Betrieb I - und zwar dann im allgemeinen wieder in den Echoamplituden-Auswertebetrieb I - übergeht. Dadurch stellt man der Auswerteschaltung G ausreichend Zeit zur Verfügung, um mit noch höherer Genauigkeit den Dopplereffekt auswerten zu können, als wenn man nur die Echos E der kurzen Ultraschall-Impulse I - die für sich z.B. nur 1 Millisekunde dauern - auf Frequenzveränderungen hin auswerten würde.

Die Auswertung des Dopplereffektes erfordert umso mehr an Zeit, an elektrischer Energie und an Verfahrensschritten, je genauer die Frequenzanalyse gemacht wird, also umso empfindlicher die Anordnung gemacht wird. Durch die Anwendung des Dauerton-Auswertebetriebes D für den Dopplereffekt-Auswertebetrieb kann mit erhöhter Wahrscheinlichkeit zuverlässig eine alarmrelevante Lage von einer alarmirrelevanten Lage unterschieden werden, obwohl durch den jeweils vorhergehenden Echoamplituden-Auswertebetrieb, der im Regelfall besonders lange dauert - nämlich solange alarmrelevante Kriterien fehlen - , besonders viel an Zeit, an elektrischer Energie (Erwärmung!) und an Verfahrensschritten gespart wird.

Bei der Anwendung des Dauerton-Auswertebetriebes D im Rahmen des Dopplereffekt-Auswertebetriebes können erfindungsgemäß zwar - mit entsprechend vermindertem Zeit-, Energie- und Verfahrensschritteaufwand nur die Veränderungen des Frequenzspektrums während dieses besonders langen Dauertones ausgewertet werden. Die Erfindung läßt es aber zu, zur weiteren Erhöhung der Empfindlichkeit der Anordnung auch die Spektren von mehreren, aufeinander folgenden Dauertönen auf alarmrelevante Frequenzveränderungen hin auszuwerten.

Die Erfindung läßt aber andererseits auch zu, bei einem Einbruch die dann oft sofort sehr starken Dopplereffekt-Frequenzveränderungen besonders rasch zur Auslösung des Alarmes N auszunutzen, also dann mit noch erhöhter Schnelligkeit eine alarmrelevante Lage melden zu können, wenn die Anordnung - nach dem Erkennen des alarmrelevanten Kriteriums beim Echoamplituden-Auswertebetrieb I und vor dem Dauerton-Auswertebetrieb D - zunächst zwar in den Dopplereffekt-Auswertebetrieb I übergeht, wenn sie aber hierbei weiterhin den Impulsecho-Betrieb I aufweist und in diesem Auswertebetriebszustand I auch das Spektrum der empfangenen Signale E auf Frequenzveränderungen überwacht, welche durch den Dopplereffekt hervorgerufen sind, bevor die Anordnung, zum Erkennen eines zusätzlichen alarmrelevanten Kriteriums, in den Dauerton-Auswertebetrieb D übergeht.

Wenn die Dopplereffekt-Frequenzänderungen relativ schwach sind, kann mit besonders hoher Wahrscheinlichkeit dann eine alarmrelevante Lage von einer alarmirrelevanten Lage unterschieden werden, wenn die Anordnung nur dann den Alarm H auslöst, wenn zuvor die Auswertung des Dopplereffektes sowohl während des Impulsecho-Betriebes I als auch während des folgenden Dauerton-AuswertebetriebesD jeweils ein ausreichend alarmrelevantes Kriterium ergab.

In jedem Fall wird aber erfindungsgemäß ein Alarm N nur dann ausgelöst, wenn ZUERST die Veränderung der empfangenen Signale E, ausgewertet nach der einen der beiden Betriebsarten der Anordnung (Echoamplituden-Auswertebetrieb I oder Dopplereffekt-Auswertebetrieb D) UND DANACH die Veränderung der empfangenen Signale E, ausgewertet nach der anderen dieser beiden Betriebsweisen, ausreichend stark sind. Bei den bisher besprochenen Beispielen der Erfindung heißt dies, daß erfindungsgemäß ein Alarm N nur dann ausgelöst wird, wenn ZUERST die Veränderung der Profile der Amplituden der empfangenen Signale E, ausgewertet nach dem Echoamplituden-Auswertebetrieb I, ausreichend stark ist UND wenn DANACH die Veränderung der Spektren der empfangenen Signale E, ausgewertet nach dem Dopplereffekt-Auswertebetrieb D, ausreichend stark ist.

Einer der Hauptvorteile der Erfindung ist die Vermeidung von Fehlalarmen durch starke Schallquellen, die außerhalb des durch den Echoamplituden-Auswerteberiebes überwachten Bereiches Ultraschall abstrahlen. Diese Fehlalarme können erfindungsgemäß aber durch die gezeigte Anordnung schon dann vermieden werden, wenn diese in umgekehrter Weise betrieben wird : wenn nämlich die Anordnung ZUERST in der zweiten Betriebsart, also im Dopplereffekt-Auswertebetrieb D, betrieben wird, BEVOR sie in die erste Betriebsart, also in den Echoamplituden-Auswertebetrieb I übergeht, falls zuvor in der zweiten Betriebsart D ein alarmrelevantes Kriterium erkannt wurde. Dann erkennt die Anordnung rasch die ferne laute Ultraschallquelle und geht sofort nach diesem Erkennen - evtl. für sehr lange Dauern - in die erste Betriebsart über, ohne in dieser ersten Betriebsart ein zusätzliches alarmrelevantes Kriterium zu finden.

Diese zweite Hauptvariante der Erfindung, welche also die eben beschriebene umgekehrte Betriebsweise aufweist, kann während ihres ZUERST durchgeführten Dopplereffekt-Auswertebetriebes D, zur Einsparung von elektrischer Energie, ebenfalls den Impulsecho-Betrieb aufweisen, bei welchen die abgestrahlten Impulse z.B. ebenfalls nur die Dauer von 1 Millisekunde aufweisen, also dieselbe Dauer, die diese abgestrahlten Impulse auch in des folgenden Echoamplituden-Auswertebetriebes aufweisen können. Mit zwar erhöhtem Stromverbrauch, aber mit höherer Zuverlässigkeit, kann aber ein Einbruch bzw. Diebstahl dann erkannt werden, wenn die Anordnung während ihres ZUERST durchgeführten Dopplereffekt-Auswertebetriebesden Dauerton-Auswertebetrieb aufweist.

Vergleichsweise besonders wenig Aufwand an elektrischer Energie und trotzdem eine sehr hohe Empfindlichkeit für das Erkennen der alarmrelevanten Kriterien weist aber die oben zuerst beschriebene andere Variante der Erfindung auf, bei welcher die Anordnung ZUERST im Echoamplituden-Auswertebetrieb I und erst DANACH im Dopplereffekt-Auswertebetrieb D nur dann betrieben wird, falls während des Echoamplituden-Auswertebetriebes I bereits ein alarmrelevantes Kriterium erkannt wurde.

Wenn die Auswerteschaltung G einen Mikroprozessor darstellt oder enthält, dann kann man nicht nur die Auswerteschaltung G elegant mit wenig Hardwareaufwand realisieren, sondern auch den Prozessor G im Regelfall - nämlich zumindest solange der Aufwand an Zeit und Verfahrensschritte mangels alarmrelevanter Kriterien noch gering ist - auch für andere Steuer- oder Rechneraufgaben mitausnutzen, also z.B. für die Steuerung einer Zentralverriegelungsanlage und / oder einer Klimaanlage.

Man kann die Anordnung mit besonders wenig Hardwareaufwand realisieren, wenn der Mikroprozessor G auch den Speicher M in Form eines RAM enthält.

**Patentansprüche**

1.  Verfahren zum Betrieb einer Anordnung zur Ultraschall-Raumüberwachung - z.B. zur Ultraschall-Überwachung von KFZ-Innenräumen -
    ° sowohl mit einer ersten Betriebsart (I), nämlich mit Impulsechoamplituden-Betrieb (I), bei welchem (I) das Profil der Amplituden der empfangenen Echos (E) von ausgestrahlten (A) Impulsen (I) überwacht wird,
    ° als auch mit einer zweiten Betriebsart (D), nämlich mit Dopplereffekt-Betrieb (I und / oder D), bei welchem (I und / oder D) das Spektrum des empfangenen Ultraschalles (E) überwacht wird,
    enthaltend
      - einen Speicher (M), z.B. einen RAM (M), welcher (M) zur Speicherung von die empfangenen Signale (E) mehr oder weniger präzis beschreibenden Daten dient und welcher (M) dazu Daten über eine oder mehrere Folgen der empfangenen Signale (E), zumindest aber Daten über einen oder mehrere Abschnitte eines der zuletzt empfangenen Signale (E) speichert, und
      - eine Auswerteschaltung (G), welche (G) im Betrieb mittels des Speichers (M)
        ° (in V) die Profile der Amplituden und die Spektren der nacheinander empfangenen Signale (E) vergleicht, und
        ° periodische, und / oder durch Luftschlieren hervorgerufene aperiodische, Änderungen der empfangenen Signale (E) zumindest weitgehend als alarmirrelevant erkennt,
      und welche (G) nach Erkennen (in V) von alarmrelevanten Vergleichsergebnissen einen Alarm (N) auslöst,
    **dadurch gekennzeichnet,** daß
      - die Auswerteschaltung (G) im Betrieb zunächst nur die eine der beiden Betriebsarten, also die erste (I) oder die zweite (D), aufweist,
      - die Auswerteschaltung (G) im Betrieb anschließend vorübergehend die andere der beiden Betriebsarten, also die zweite (D) oder die erste (I), nur dann aufweist, wenn zuvor die eine Betriebsart ein alarmrelevantes Kriterium aufwies, und
      - die Auswerteschaltung (G) erst nach dem Erkennen (in V) von alarmrelevanten Kriterien, bezogen auf beide Betriebsarten (I und D), den Alarm (N) auslöst.

2.  Verfahren zum Betrieb einer Anordnung nach Patentanspruch 1,
    **dadurch gekennzeichnet,** daß
      - die Auswerteschaltung (G) im Betrieb zunächst nur die erste Betriebsart (I) aufweist, also die Profile der Amplituden der empfangenen Signale (E) beim Impulsechoamplituden-Betrieb (I) vergleicht,
      - die Auswerteschaltung (G) im Betrieb anschließend vorübergehend die zweite Betriebsart (D) aufweist, also anschließend die Spektren der empfangenen Signale (E) nur dann (in V) vergleicht, wenn zuvor der Vergleich (in V) der Profile der Amplituden der empfangenen Signale (E) ein alarmrelevantes Kriterium aufwies, und
      - die Auswerteschaltung (G) erst nach dem Erkennen (in V) von alarmrelevanten Vergleichsergebnissen, bezogen auf beide Betriebsarten (I und D), den Alarm (N) auslöst.

3. Verfahren zum Betrieb einer Anordnung nach Patentanspruch 1 oder 2,
   **dadurch gekennzeichnet,** daß
   - sie im Betrieb ständig nur den Ultraschall-Impulsecho-Betrieb (I) aufweist.

4. Verfahren zum Betrieb einer Anordnung nach Patentanspruch 2,
   **dadurch gekennzeichnet,** daß
   - sie zunächst nur den Ultraschall-Impulsechoamplituden-Betrieb (I) aufweist,
   - sie aber nach dem Erkennen (in V) des alarmrelevanten Kriteriums, bezogen auf die Profile der Amplituden der empfangenen Signale (E), zur Erkennung von Änderungen des Spektrums der empfangenen Signale (E), vorübergehend einen Ultraschall-Dauertonbetrieb (D) aufweist, dessen Dauer mindestens 10-fach, z.B. 150-fach, länger ist als die jeweilige Dauer der zuvor im Ultraschall-Impulsechoamplituden-Betrieb (I) ausgesendeten Impulse (I),
   - bevor sie wieder einen Ultraschall-Impulsechoamplituden-Betrieb (I) aufweist.

5. Verfahren zum Betrieb einer Anordnung nach Patentanspruch 4,
   **dadurch gekennzeichnet,** daß
   - sie nach dem Erkennen (in V) des alarmrelevanten Kriteriums, vor dem Aufweisen des Ultraschall-Dauertonbetriebes (D), zunächst weiterhin den Ultraschall-Impulsechoamplituden-Betrieb (I) aufweist und in diesem Betriebszustand zunächst auch das Spektrum der empfangenen Signale (E) überwacht,
   - bevor sie schließlich, zum Erkennen eines zusätzlichen alarmrelevanten Kriteriums, noch den Ultraschall-Dauertonbetrieb (D) aufweist.

6. Verfahren zum Betrieb einer Anordnung nach Patentanspruch 1 oder 5,
   **dadurch gekennzeichnet,** daß
   - sie nur dann Alarm (N) auslöst, wenn die Berücksichtigung des Dopplereffektes sowohl während des Ultraschall-Impulsechoamplituden-Betriebes (I) als auch während des Ultraschall-Dauertonbetriebes (D) jeweils ein ausreichend alarmrelevantes Kriterium ergab.

7. Anordnung mit Auswerteschaltung (G) und Speicher (M) zur Durchführung des Verfahrens nach einem der vorhergehenden Patentansprüche.

8. Anordnung nach Patentanspruch 7,
   **dadurch gekennzeichnet,** daß
   - die Auswerteschaltung (G) einen Mikroprozessor (G) enthält.

9. Anordnung nach Patentanspruch 8,
   **dadurch gekennzeichnet,** daß
   - der Mikroprozessor (G) den Speicher (M) in Form eines RAM (M) enthält.

FIG 1

FIG 2

FIG 3

FIG 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | DE-C-3 410 888  (METZ) <br> * Anspruch 1 * <br> – – – | 1 | G 08 B 13/16 |
| Y | DE-C-3 805 439  (DO TRONIC) <br> * Figur 1; Anspruch 5 * <br> – – – | 1 | |
| Y | EP-A-0 026 385  (SIEMENS) <br> * Figur 1; Zusammenfassung * <br> – – – | 1 | |
| Y | EP-A-0 368 303  (KABELWERKE REINSHAGEN) <br> * Figur 1; Zusammenfassung * <br> – – – | 1 | |
| A | DE-A-3 127 345  (SIEMENS) <br> * Seite 3, Zeile 12 - Seite 4, Zeile 20 * <br> – – – | 1 | |
| A | DE-U-8 912 983  (SIEMENS) <br> * Anspruch 1 * <br> – – – | 9 | |
| A | DE-C-3 529 402  (F + G MEGAMOS) <br> * Zusammenfassung * <br> – – – | | |
| A | CH-A-613 793  (HOCKIKI) <br> * Seite 4, Spalte 1, Zeile 39 - Spalte 2, Zeile 30 * <br> – – – – – | | |

| RECHERCHIERTE SACHGEBIETE (Int. Cl.5) |
|---|
| G 08 B <br> B 60 R <br> G 01 S |

Der vorliegende Recherchenbericht wurde für alle Patentansprüche erstellt

| Recherchenort | Abschlußdatum der Recherche | Prüfer |
|---|---|---|
| Berlin | 17 April 91 | BREUSING J |